**Europäisches Patentamt**

**European Patent Office**

**Office européen des brevets**

(11) Veröffentlichungsnummer: **0 170 079**
**A2**

(12) # EUROPÄISCHE PATENTANMELDUNG

(21) Anmeldenummer: **85108178.6**

(22) Anmeldetag: **02.07.85**

(51) Int. Cl.⁴: **G 05 D 11/00**

(30) Priorität: **31.07.84 DE 3428131**

(43) Veröffentlichungstag der Anmeldung:
**05.02.86 Patentblatt 86/6**

(84) Benannte Vertragsstaaten:
**CH FR GB IT LI NL**

(71) Anmelder: **Chemie und Filter GmbH**
**Im Schuhmachergewann 7-11 Postfach 101760**
**D-6900 Heidelberg(DE)**

(72) Erfinder: **Berger, Hermann**
**Jasperstrasse 7**
**D-6900 Heidelberg(DE)**

(74) Vertreter: **Knoblauch, Ulrich, Dr.-Ing.**
**Kühhornshofweg 10**
**D-6000 Frankfurt am Main 1(DE)**

(54) **Verfahren zum Regeln einer Kenngrösse eines Mediums durch Zufuhr von Dosiergut und zugehörige Regelschaltung.**

(57) Bei einem Verfahren zum Regeln einer Kenngröße eines Mediums durch Zufuhr von intermittierend abgebbarem Dosiergut werden jeweils Dosiergut-Teilmengen taktmäßig durch Dosiersignale ausgelöst. Die Taktdauer ist änderbar, wenn der Istwert der Kenngröße außerhalb eines Sollwertbereichs liegt. Es wird diejenige Taktdauer gespeichert, die wirksam ist, wenn der Istwert in den Sollwertbereich eintritt. Die Dosiersignale werden mit der gespeicherten Taktdauer abgegeben, solange der Istwert innerhalb des Sollwertbereichs liegt.

Eine Schaltung zur Festlegung der Taktdauer umfaßt einen Speicher (ZI), der die Taktdauer $(t_t)$ kennzeichnende Daten aufnimmt, die beim Vorhandensein des Fehlersignals (f) änderbar sind und beim Fortfall des Fehlersignals unverändert bleiben. Eine Auslesevorrichtung (Z2) dient zum Auslesen der Daten aus dem Speicher (Z1) und zum Umsetzen in die Taktdauer.

Auf diese Weise ergibt sich eine Regelung mit sehr geringen Abweichungen vom Sollwert.

./...

- 1 -

## Verfahren zum Regeln einer Kenngröße eines Mediums durch Zufuhr von Dosiergut und zugehörige Regelschaltung

Die Erfindung bezieht sich auf ein Verfahren zum Regeln einer Kenngröße eines Mediums durch Zufuhr von intermittierend abgebbarem Dosiergut, bei dem der Istwert der Kenngröße gemessen und mit einem Sollwert verglichen wird und jeweils vorzugsweise konstante Teilmengen taktmäßig durch Dosiersignale ausgelöst werden, deren Taktdauer von der Regelabweichung abhängt, sowie auf eine Regelschaltung zur Erzeugung der Dosiersignale, mit einem Vergleicher, einem Dosiersignalausgang und einer Schaltung zur Festlegung der Taktdauer.

Eine solche Kenngröße ist beispielsweise der pH-Wert, der Redox-Wert, der Chlor-Gehalt, der Gehalt an Kalkbildnern, der Verunreinigungsgrad von Brauch- und Abwässern, kann aber auch eine beliebige Kenngröße in einem anderen Material, beispielsweise einer chemischen Lösung, sein, die durch die Zugabe von Dosiergut änderbar ist. Hauptsächliche Anwendungsgebiete sind die pH-Regelung, die Redox-Regelung, die Neutralisierung und die Chlorregelung. Für die intermittierende Zufuhr kommen beipielsweise Membranpumpen, die bei jedem Dosiersignal einen Hub ausführen, oder Magnetventile in Betracht, die bei jedem Dosiersignal für eine vorbestimmte Zeit öffnen. Der den Istwert feststellende Meßwertaufnehmer ist normalerweise an einer Stelle angebracht, an der sich das intermittierend zugeführte Dosiergut bereits verteilt hat, also mit Abstand hinter der Zugabestelle in der Rohrleitung oder in einem nachgeschalteten Behälter, z.B. einem Schwimmbecken.

Wenn bei bekannten Verfahren durch entsprechende Dosiergutzugabe der Istwert den Sollwert erreicht hatte, wurde das Dosiersignal unterbrochen und damit die Zugabe von Dosiergut eingestellt. Wenn aber das zulaufende Medium eine stark abweichende Kenngröße aufwies, ergab sich kurz nach Unterbrechung der Dosierimpulse bereits wieder eine große Regelabweichung. Dies führte zu verhältnismäßig raschen und starken Schwankungen der Kenngröße auch hinter der Eingabestelle für das Dosiergut.

Der Erfindung liegt die Aufgabe zugrunde, ein Regelverfahren der eingangs beschriebenen Art anzugeben, mit dem es gelingt, die Istwertschwankungen ganz erheblich herabzusetzen.

Diese Aufgabe wird erfindungsgemäß dadurch gelöst, daß festgestellt wird, ob der Istwert der Kenngröße außerhalb eines durch mindestens einen Grenzwert definierten Sollwertbereich liegt, daß diejenige Taktdauer gespeichert wird, die wirksam ist, wenn der Istwert in den Sollwertbereich eintritt, und daß die Dosiersignale mit der gespeicherten Taktdauer abgegeben werden, solange der Istwert innerhalb des Sollwertbereichs liegt.

Bei diesem Vorgehen ist um den Sollwert herum eine Totzone vorgesehen, die hier als Sollwertbereich bezeichnet wird. Die Dosiersignale werden nicht unterbrochen, wenn der Sollwertbereich erreicht ist, sondern es wird weiterhin Dosiergut intermittierend eingespeist. Dadurch daß die zuletzt gültige Taktdauer weiter benutzt wird, entspricht die pro Zeiteinheit eingespeiste Dosiergutmenge annähernd derjenigen Menge, die zur Korrektur der Kenngröße erforderlich ist. Im Vergleich zum Fortfall der Dosierguteinspeisung treten nur noch ganz geringe Fehler auf, aufgrund deren der Istwert wieder aus dem Sollwertbereich herauswandern kann. Dies geschieht aber erst nach längerer Zeit und mit sehr viel geringeren Abweichungen. Es ergibt sich daher eine sehr ruhige Regelung.

Mit besonderem Vorteil ist die Taktdauer eine Funktion der Fehlerzeit, die seit dem Austreten des Istwerts aus dem Sollwertbereich vergangen ist. Die Taktdauer wird um so stärker verändert, je länger die Fehlerzeit ist. Hierdurch wird auf einfache Weise erreicht, daß beim nächsten Speichern der Taktdauer, wenn der Istwert wieder in den Sollwertbereich eintritt, eine solche Dosiergutmenge pro Zeiteinheit zugeführt wird, daß, wenn überhaupt noch ein Fehler auftritt, die Fehlerzeit beim nächsten Mal verkürzt ist. Eine weitere Vereinfachung ergibt sich dadurch, daß es bei der Berücksichtigung der Fehlerzeit nicht auf die Größe der Regelabweichung ankommt.

Wenn der Sollwertbereich nur nach einer Seite vom Istwert abweichen kann, sollte die Taktdauer der Fehlerzeit unmittelbar nachgeführt werden. Bei einem Sollwertbereich aber, den der Istwert über- und unterschreiten kann, empfiehlt es sich, daß die Fehlerzeit die Taktdauer beim Überschreiten in der einen und beim Unterschreiten in der anderen Richtung verändert. Auf diese Weise wird eine sehr ruhige Regelung um den tatsächlichen Sollwert herum erreicht.

Eine besonders einfache Ausführung ergibt sich, wenn die Taktdauer n Taktdauerabschnitte aufweist und lediglich die Zahl n gespeichert wird. Hierfür genügt ein sehr einfacher Speicher.

Vorzugsweise wird den n Taktdauerabschnitten eine Mindestzeit vorgeschaltet, so daß sich auf alle Fälle eine Mindesttaktdauer ergibt.

Hierbei ist es ferner günstig, wenn jeweils nach einem Fehlerzeitabschnitt vorgegebener Länger ein Impuls abgegeben wird, der die Zahl n um 1 ändert. Auf diese Weise wird auch die Umsetzung der Fehlerzeit in die Taktdauer ganz erheblich vereinfacht.

Mit Vorteil wird beim Einschalten automatisch diejenige Taktdauer gespeichert, die dem größtmöglichen Fehler entspricht. Innerhalb weniger Regelspiele hat sich dann die Taktdauer auf den für die Erreichung des Sollwerts optimalen Wert eingependelt.

Desweiteren können die Dosiersignale abgeschaltet werden, wenn die kleinste Taktdauer auftritt, obwohl der Istwert außerhalb des Sollwertbereichs liegt. Auf diese Weise läßt sich die Dosiergutzugabe vom Kleinstwert noch weiter bis auf Null herabsetzen.

Eine Regelschaltung zur Erzeugung der Dosiersignale mit einem Vergleicher, einem Dosiersignalausgang und einer Schaltung zur Festlegung der Taktdauer, ist erfindungsgemäß dadurch gekennzeichnet, daß der Vergleicher (V) ein Fehlersignal (f) abgibt, wenn der Istwert (i) einer Kenngröße außerhalb eines Sollwertbereichs liegt, und daß die Schaltung zur Festlegung der Taktdauer einen Speicher der die Taktdauer kennzeichnende Daten aufnimmt, die beim Vorhandensein des Fehlersignals änderbar sind und beim Fortfall des Fehlersignals unverändert bleiben, und eine Auslesevorrichtung zum Auslesen der Daten aus dem Speicher und zum Umsetzen in die Taktdauer aufweist.

Bei dieser Anordnung sind der Speicher und die hinzugeordnete Auslesevorrichtung dauernd wirksam. Die angestrebte Regelung ergibt sich einfach dadurch, daß der Speicherinhalt beim Fortfall des Fehlersignals erhalten bleibt.

Bei einer bevorzugten Ausführungsform ist dafür gesorgt, daß der Speicher ein erster Zähler ist, dem beim Vorhandensein des Fehlersignals von einem ersten Impulsgeber jeweils nach Ablauf eines vorgegebenen Fehlerzeitabschnitts ein Zählerimpuls zuführbar ist, und daß die Auslesevorrichtung einen zweiten Zähler aufweist, dem von einem zweiten Impulsgeber jeweils nach Ablauf eines vorgegebenen Taktdauerabschnitts ein Zählerimpuls zuführbar ist und der nach Erreichen eines Zählerstandes, der demjenigen des ersten Zählers entspricht, ein Dosiersignal auslöst. Der erste Zähler stellt eine besonders einfache Art des Speichers dar. Auch der zweite Zähler ergibt eine sehr einfache Auslesevorrichtung. Durch den ersten Impulsgeber lassen sich die Fehlerzeitabschnitte und durch den zweiten Impulsgeber die Taktdauerabschnitte ohne großen Aufwand erzeugen.

Günstig ist es auch, wenn bei einem Sollwertbereich, den der Istwert überschreiten und unterschreiten kann, der erste Zähler ein Vorwärts-Rückwärts-Zähler ist und der Vergleicher beim Vorhandensein eines Fehlersignals außerdem ein das Überschreiten oder Unterschreiten kennzeichnendes Zählrichtungssignal für den ersten Zähler erzeugt. Dies erlaubt eine sehr genaue Regelung mit geringem Aufwand.

Mit Vorteil weist der erste Impulsgeber einen Oszillator und einen nachgeschalteten Teiler sowie eine beim Fehlen des Fehlersignals wirksame Sperrstufe auf. Dies ist eine einfache Möglichkeit, den Speicherinhalt beim Fehlen des Fehlersignals unverändert zu lassen.

Der erste Impulsgeber kann ferner eine weitere Sperrstufe aufweisen, der vom ersten Zähler ein von der Zählrichtung abhängiges Zählende-Signal zuführbar ist. Auf diese Weise wird verhindert, daß der erste Zähler durch Einspeisung eines weiteren Zählimpulses wieder an das andere Zählende geschaltet wird.

Mit Vorteil ist der zweite Zähler ein Rückwärtszähler, der vom Zählerstand des ersten Zählers gesetzt wird und beim Erreichen von Null ein Dosiersignal auslöst. Auf diese Weise ist dafür gesorgt, daß unabhängig vom Zählerstand des ersten Zählers das Dosiersignal immer durch dieselbe Signalkombination am Ausgang des zweiten Zählers ausgelöst wird.

Ferner kann das Zählendesignal des zweiten Zählers seinem Ausleseeingang, bei dessen Erregung der Zählerstand des ersten Zählers ausgelesen wird, und einer Auslöseschaltung zuführbar sein, die den zweiten Impulsgeber freigibt und den Dosierimpuls erzeugt. Auf diese Weise kann sofort nach Abgabe des Zählendesignals ein neuer Takt beginnen.

Die Auslöseschaltung weist zweckmäßigerweise ein Zeitglied auf, das nach Ablauf einer vorgegebenen Mindestzeit den zweiten Impulsgeber wirksam macht. Damit kann erreicht werden, daß die kürzeste Taktdauer um die Mindestzeit größer ist als der vorgegebene Taktdauerabschnitt, so daß eine zu enge Aufeinanderfolge von Dosiersignalen verhindert wird.

Außerdem kann die Auslöseschaltung einen Sperreingang aufweisen, dem vom ersten Zähler ein Zählendesignal zuführbar ist, wenn der der längsten Taktdauer entsprechende Zählerstand erreicht ist. Dieser Sperreingang wird wirksam, wenn trotz der längsten Taktdauer immer noch ein Fehlersignal auftritt.

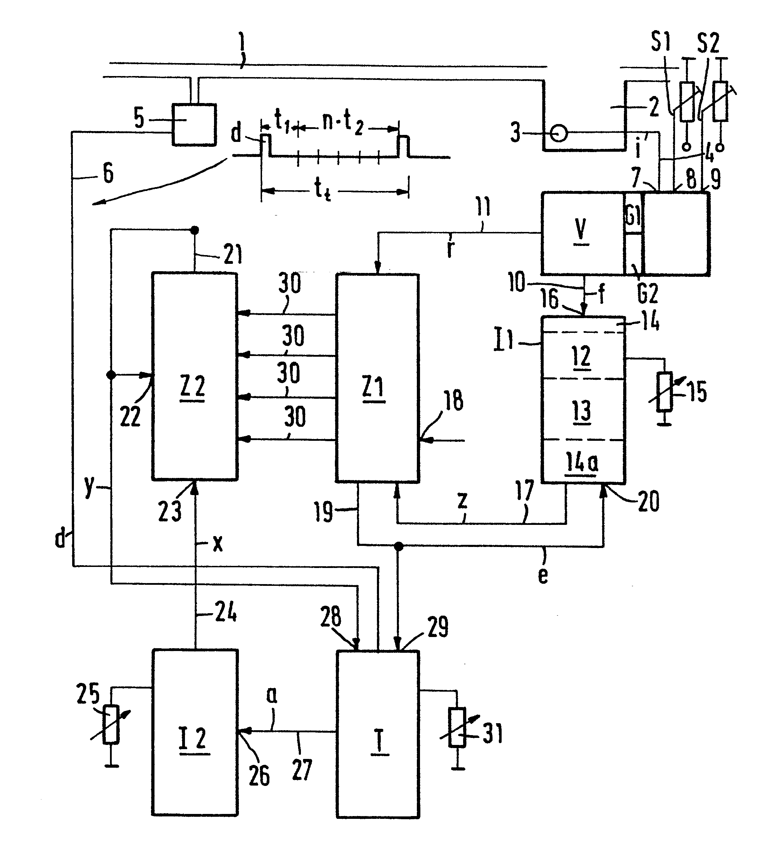

Die Erfindung wird nachstehend anhand eines in der Zeichnung dargestellten, bevorzugten Ausführungsbeispiels näher erläutert. Die Zeichnung veranschaulicht ein schematisches Blockschaltbild einer erfindungsgemäßen Regelschaltung.

Über eine Leitung 1 wird eine Flüssigkeit, beispielsweise Wasser, zugeleitet, das im Durchlauf durch den Zusatz von Lauge und/oder Säure neutralisiert werden soll. In einem Ausgleichsbecken 2 befindet sich ein Meßwertgeber 3, der über eine Leitung 4 den Istwert der Kenngröße, also den pH-Wert, abgibt. Zur Einspeisung des Dosierguts ist eine Membranpumpe 5 vorgesehen, die über ihren Eingang 6 Dosiersignale d empfängt und bei jedem Signal einen Hub ausführt, also eine vorbestimmte Dosiergutmenge in die Leitung 1 einspeist.

Ein Vergleicher V besitzt einen Istwerteingang 7, über den das Istwertsignal i zugeführt wird, und zwei Sollwerteingänge 8 und 9, über die mittels zweier Potentiometer zwei einen Sollwertbereich bestimmende Grenzwerte s1 und s2 zuführbar sind. Überschreitungssignale G1 und G2 treten auf, wenn der Sollwertbereich nach unten oder oben überschritten ist. Der Vergleicher V gibt über eine erste Ausgangsleitung 10 ein Fehlersignal f ab, wenn sich der Istwert i außerhalb des Sollwertbereichs befindet, und über eine zweite Ausgangsleitung 11 ein Zählrichtungssignal r, das kennzeichnet, ob der Istwert oberhalb des Grenzwerts s1 oder unterhalb des Grenzwerts s2 liegt.

Ein erster Impulsgeber I1 weist einen Oszillator 12, einen Teiler 13, eine Sperrstufe 14, die beim Fortfall des Fehlersignals f wirksam wird, und eine Sperrstufe 14a, die beim Auftreten eines Zählendesignals e wirksam wird, auf. Die Frequenz des Oszillators ist mittels eines Potentiometers 15 einstellbar. Wird an den Eingang 16 dieses ersten Impulsgebers I1 das Fehlersignal f angelegt, ergibt sich nach einer vorgegebenen Zeit, hier als Fehlerzeitabschnitt bezeichnet, auf der Ausgangsleitung 17 ein Zählimpuls z.

Dieser Zählimpuls z wird einem als Speicher dienenden ersten Zähler Z1 zugeführt. Es handelt sich um einen Vorwärts-Rückwärts-Zähler, dessen Zählerstand sich in Abhängigkeit von dem Zählrichtungssignal r um 1 erhöht oder erniedrigt. Über einen Eingang 18 erhält der erste Zähler Z1 beim Einschalten der Regelschaltung ein Signal, das ihn auf den untersten oder obersten Endwert stellt. Über eine Ausgangsleitung 19 vermag der Zähler Z1 ein Zählendesignal e an den Sperreingang 20 der Sperrstufe 14a zu legen, wenn in der Zählrichtung das Ende des Zählbereichs erreicht worden ist. In diesem Fall vermag der Impulsgeber I1 den Zähler Z1 nicht weiterzuschalten.

Die Auslösung des Dosiersignals d erfolgt in Abhängigkeit von einem Rückwärts-Zähler Z2. Dieser besitzt einen Zählendeausgang Z1, der ein Zählendesignal y abzugeben vermag, und einen Ausleseeingang 22. Wenn an ihm das Zählendesignal y auftritt, übernimmt der Zähler Z2 über Verbindungsleitungen 30 den Zählerstand des ersten Zählers Z1. Dem Eingang 23 des Zählers Z2 werden über eine Leitung 24 Zählimpulse x von einem zweiten Impulsgeber I2 zugeführt. Der Impulsabstand, der einem vorgegebenen Taktdauerabschnitt $t_2$ entspricht, kann durch das Potentiometer 25 eingestellt werden. Der zweite Zeitgeber I2 ist gesperrt, solange seinem Sperreingang 26 ein Sperrsignal a über die Leitung 27 von einem Zeitglied T zugeführt wird. Wenn dieses Zeitglied durch Auftreten eines Zählendesignals y an seinem Eingang 28 erregt worden ist, gibt es während einer vorgegebenen Mindestzeit $t_1$, die mit Hilfe eines Potentiometers 31 einstellbar ist, das Sperrsignal a ab. Gleichzeitig dient das Zeitglied T als Auslöseschaltung, die das Dosiersignal d während der Laufzeit des Zeitgliedes oder eines Teils dieser Laufzeit abgibt. Im Zeitdiagramm ist veranschaulicht, daß das Dosiersignal d während der ersten Hälfte von $t_1$ vorhanden ist; es kann aber auch in der zweiten Hälfte abgegeben werden. Das Zeitglied T besitzt ferner einen Sperreingang 29, dem vom ersten Zähler Z1 ein Zählendesignal e zuführbar ist, wenn der der längsten Taktdauer entsprechende Zählerstand erreicht ist. In diesem Fall wird die Arbeit des Zeitgliedes T und damit die Abgabe des Sperrsignals a, der Zählimpulse x und der Dosiersignale d unterbunden.

Diese Regelschaltung arbeitet in der folgenden Weise: Wenn der Istwert i der Kenngröße innerhalb des Sollbereichs liegt, tritt kein Fehlersignal f auf. Der Zählerstand des ersten Zählers Z1 bleibt unverändert, ist also gespeichert. Er wird jedes Mal beim Auftreten eines Zählendesignals y in den zweiten Zähler Z2 übernommen. Durch das Zählendesignal y wird auch das Zeitglied T erregt. Es gibt während einer vorbestimmten Mindestzeit t1 das Sperrsignal a und innerhalb dieser Mindestzeit das Dosiersignal d ab. Nach Ablauf von $t_1$ arbeitet der zweite Impulsgeber I2. Er gibt nach einem vorgegebenen Taktdauerabschnitt $t_2$ einen Zählimpuls x ab. Hierdurch wird der Zählerstand des Zählers Z2 um 1 vermindert. Hatte der Zählerstand des ersten Zählers Z1 den Wert n, so erreicht der zweite Zähler Z2 nach n Zählimpulsen x seinen Endwert 0 und gibt das Zählendesignal y ab. Gleichzeitig beginnt ein neuer Taktzyklus. Die Taktdauer

$t_t$ ist daher gegeben durch die Zeitgröße $(t_1 + n \cdot t_2)$. Durch Ändern der Zahl n ergibt sich die gewünschte Änderung der Taktdauer.

Überschreitet nun der Istwert i den oberen Grenzwert s1 des Sollwertbereichs, so bedeutet dies, daß zu viel Dosiergut eingespeist worden ist. Die Taktdauer muß also vergrößert werden. Dies geschieht dadurch, daß das Zählrichtungssignal r einen Aufwärtsbefehl an den Zähler Z1 gibt. Das gleichzeitig auftretende Fehlersignal f gibt nach einer vorgegebenen Zeit, dem Fehlerzeitabschnitt, einen Zählimpuls z an den Zähler Z1, dessen Zählerstand sich um 1 erhöht. Je nach der Dauer des Fehlersignals f können mehrere solcher Zählimpuls z auftreten. Die Dosiersignale d werden in der gleichen Weise wie zuvor erzeugt, was bedeutet, daß die Taktdauer wegen der Vergrößerung des Wertes n steigt. Es wird also weniger Dosiergut zugeführt. Nach einer gewissen Zeit unterschreitet der Istwert i wieder den Grenzwert s1 und der Inhalt des Zählers Z1 bleibt auf diesem neuen Wert unverändert.

Entweder entspricht dieser Wert der Taktdauer der Erreichung des gewünschten Sollwerts oder es wird nach einiger Zeit der untere Grenzwert s2 unterschritten. Nunmehr wird an den Zähler Z1 mittels des Zählrichtungssignals r ein Abwärtsbefehl gegeben. Während der Dauer des Fehlersignals f auftretende Zählimpulse z führen daher zu einer Verminderung des Zählerstandes des Zählers Z1. Dies führt zu einer Verkürzung der Taktdauer und damit zu einer Erhöhung der Dosiergutmenge. Im Endeffekt pendelt sich die Zahl n und damit die Taktdauer auf einem Wert ein, der optimal ist und die geringstmöglichen Abweichungen vom Sollwert ergibt.

Beim Einschalten der Regelschaltung wird durch einen Befehl am Eingang 18 dafür gesorgt, daß der Zähler Z1 einen Wert annimmt, der dem größtmöglichen Fehler entspricht. Schon nach wenigen Regelspielen hat der Zähler Z1 den optimalen Wert n erreicht.

Bei einer Ausführungsform war der Zeitgeber T auf eine Mindestzeit von 200 ms eingestellt, während der zweite Impulsgeber I2 auf einen Taktdauerabschnitt von 400 ms eingestellt war. Bei den Zählern Z1 und Z2 konnten die Werte n zwischen 1 und 15 liegen. Daraus ergab sich die kürzeste Taktdauer von 600 ms. Diese konnte in Stufen von 400 ms bis insgesamt auf 6200 ms, also rund 10 Sekunden, erhöht werden.

In ähnlicher Weise läßt sich auch ein Magnetventil ansteuern, bei dem eine Taktdauer der Summe von Einschaltdauer und Ausschaltdauer entspricht und die Einschaltdauer konstant gehalten ist. Zumeist wird hierbei mit einer längeren Taktdauer gearbeitet. Zweckmäßig ist auch eine Sperre, die verhindert, daß das Magnetventil dauernd geöffnet ist.

Statt der beschriebenen 15 Schritte kann auch eine andere Aufteilung vorgenommen werden, beispielsweise können die beiden Zähler jeweils aus mehreren Zählereinheiten bestehen, die in Kaskade geschaltet sind und beispielsweise eine Unterteilung in 255 Schritte erlauben.

Bei einem Ausführungsbeispiel wurden die einzelnen Schaltungsbestandteile unter Verwendung der folgenden handelsüblichen integrierten Schaltungen der Firma RCA aufgebaut:

- 12 -

| Vergleicher V     | CD4001  |
| Zähler Z1         | CD4029  |
| Zähler Z2         | CD4029  |
| Impulsgeber I1    | CD4046  |
|                   | CD4040  |
|                   | CD4001  |
| Impulsgeber I2    | CD4046  |
| Zeitgeber T       | CD4046  |
|                   | CD4040. |

Die Pumpe 5 war eine Membranpumpe "Prominent" der Anmelderin. Als Meßwertgeber wurden eine pH-Meßkette, eine Redox-Meßkette oder eine Chlor-Meßkette verschiedener Hersteller benutzt.

- 1 -

Patentansprüche

1. Verfahren zum Regeln einer Kenngröße eines Mediums durch Zufuhr von intermittierend abgebbarem Dosiergut, bei dem der Istwert der Kenngröße gemessen und mit einem Sollwert verglichen wird und jeweils vorzugsweise konstante Teilmengen taktmäßig durch Dosiersignale ausgelöst werden, deren Taktdauer von der Regelabweichung abhängt, dadurch gekennzeichnet, daß festgestellt wird, ob der Istwert der Kenngröße außerhalb eines durch mindestens einen Grenzwert definierten Sollwertbereich liegt, daß diejenige Taktdauer gespeichert wird, die wirksam ist, wenn der Istwert in den Sollwertbereich eintritt, und daß die Dosiersignale mit der gespeicherten Taktdauer abgegeben werden, solange der Istwert innerhalb des Sollwertbereiches liegt.

2. Verfahren nach Anspruch 1, dadurch gekennzeichnet, daß die Taktdauer eine Funktion der Fehlerzeit ist, die seit dem Austreten des Istwerts aus dem Sollwertbereich vergangen ist.

3. Verfahren nach Anspruch 2, dadurch gekennzeichnet, daß bei einem Sollwertbereich, den der Istwert überschreiten und unterschreiten kann, die Fehlerzeit die Taktdauer beim Überschreiten in der einen und beim Unterschreiten in der anderen Richtung verändert.

4. Verfahren nach einem der Ansprüche 1 bis 3, dadurch gekennzeichnet, daß die Taktdauer n Taktdauerabschnitte aufweist und lediglich die Zahl n gespeichert wird.

5. Verfahren nach Anspruch 4, dadurch gekennzeichnet, daß den Taktdauerabschnitten eine Mindestzeit vorgeschaltet ist.

6. Verfahren nach den Ansprüchen 3 und 4 oder 5, dadurch gekennzeichnet, daß jeweils nach einem Fehlerzeitabschnitt vorgegebener Länge ein Impuls abgegeben wird, der die Zahl n um 1 ändert.

7. Verfahren nach einem der Ansprüche 1 bis 6, dadurch gekennzeichnet, daß beim Einschalten automatisch diejenige Taktdauer gespeichert wird, die dem größtmöglichen Fehler entspricht.

8. Verfahren nach einem der Ansprüche 1 bis 7, dadurch gekennzeichnet, daß die Dosiersignale abgeschaltet werden, wenn die kleinste Taktdauer auftritt, obwohl der Istwert außerhalb des Sollwertbereichs liegt.

9. Regelschaltung zur Erzeugung der Dosiersignale nach einem der Ansprüche 1 bis 8, mit einem Vergleicher, einem Dosiersignalausgang und einer Schaltung zur Festlegung der Taktdauer, dadurch gekennzeichnet, daß der Vergleicher (V) ein Fehlersignal (f) abgibt, wenn der Istwert (i) einer Kenngröße außerhalb eines Sollwertbereichs liegt, und daß die Schaltung zur Festlegung der Taktdauer einen Speicher (Z1), der die Taktdauer ($t_t$) kennzeichnende Daten aufnimmt, die beim Vorhandensein des Fehlersignals (f) änderbar sind und beim Fortfall des Fehlersignals unverändert bleiben, und eine Auslesevorrichtung (Z2) zum Auslesen der Daten aus dem Speicher und zum Umsetzen in die Taktdauer aufweist.

10. Regelschaltung nach Anspruch 9, dadurch gekennzeichnet, daß der Speicher ein erster Zähler (Z1) ist, dem beim Vorhandensein des Fehlersignals (f) von einem ersten Impulsgeber (I1) jeweils nach Ablauf eines vorgegebenen Fehlerzeitabschnitts ein Zählerimpuls (z) zuführbar ist, und daß die Auslesevorrichtung einen zweiten Zähler (Z2) aufweist, dem von einem zweiten Impulsgeber (I2) jeweils nach Ablauf eines vorgegebenen Taktdauerabschnitts ($t_2$) ein Zählerimpuls (x) zuführbar ist und der nach Erreichen eines Zählerstandes, der demjenigen des ersten Zählers entspricht, ein Dosiersignal (d) auslöst.

11. Regelschaltung nach den Ansprüchen 9 oder 10, dadurch gekennzeichnet, daß bei einem Sollwertbereich, den der Istwert (i) überschreiten und unterschreiten kann, der erste Zähler (Z1) ein Vorwärts-Rückwärts-Zähler ist und der Vergleicher (V) beim Vorhandensein eines Fehlersignals (f) außerdem ein das Überschreiten oder Unterschreiten kennzeichnendes Zählrichtungssignal (n) für den ersten Zähler (Z1) erzeugt.

12. Regelschaltung nach einem der Ansprüche 9 bis 11, dadurch gekennzeichnet, daß der erste Impulsgeber (I1) einen Oszillator (12) und einen nachgeschalteten Teiler (13) sowie eine beim Fehlen des Fehlersignals (f) wirksame Sperrstufe (14) aufweist.

13. Regelschaltung nach Anspruch 12, dadurch gekennzeichnet, daß der erste Impulsgeber (I1) eine weitere Sperrstufe (14a) aufweist, der vom ersten Zähler (Z1) ein von der Zählrichtung abhängiges Zählendesignal (e) zuführbar ist.

14. Regelschaltung nach einem der Ansprüche 10 bis 13, dadurch gekennzeichnet, daß der zweite Zähler (Z2) ein Rückwärtszähler ist, der vom Zählerstand des ersten Zählers (Z1) gesetzt wird und beim Erreichen von Null ein Dosiersignal (d) auslöst.

15. Regelschaltung nach einem der Ansprüche 10 bis 14, dadurch gekennzeichnet, daß das Zählendesignal (y) des zweiten Zählers (Z2) seinem Ausleseeingang (22), bei dessen Erregung der Zählerstand des ersten Zählers (Z1) ausgelesen wird, und einer Auslöseschaltung (T) zuführbar ist, die den zweiten Impulsgeber (I2) freigibt und den Dosierimpuls (d) erzeugt.

16. Regelschaltung nach Anspruch 15, dadurch gekennzeichnet, daß die Auslöseschaltung ein Zeitglied (T) aufweist, das nach Ablauf einer vorgegebenen Mindestzeit ($t_1$) den zweiten Impulsgeber (I2) wirksam macht.

17. Regelschaltung nach Anspruch 15 oder 16, dadurch gekennzeichnet, daß die Auslöseschaltung (T) einen Sperreingang (29) aufweist, dem vom ersten Zähler (Z1) ein Zählendesignal (e) zuführbar ist, wenn der der längsten Taktdauer entsprechende Zählerstand erreicht ist.